(19) Europäisches Patentamt
European Patent Office
Office européen des brevets

(11) EP 0 776 934 A1

# (12) EUROPÄISCHE PATENTANMELDUNG

(43) Veröffentlichungstag: **04.06.1997 Patentblatt 1997/23**

(51) Int. Cl.[6]: **C08K 5/529**

(21) Anmeldenummer: **96118448.8**

(22) Anmeldetag: **18.11.1996**

(84) Benannte Vertragsstaaten: **BE DE ES FR GB IT NL**

(30) Priorität: **30.11.1995 DE 19544675**

(71) Anmelder: **BAYER AG**
**51368 Leverkusen (DE)**

(72) Erfinder:
- **Magerstedt, Herbert**
  **47445 Moers (DE)**
- **Grigat, Ernst, Dr.**
  **51381 Leverkusen (DE)**

## (54) Mit Phosphorigsäureestern stabilisierte Polymer-Formmassen

(57) Thermoplastische Formmassen enthaltend

A) Polymere, ausgewählt aus der Gruppe der Polyolefine, Styrolpolymerisate, Polyamide, Polyalkylmethacrylate, Polyphenylensulfide, ABS-Pfropfpolymerisate, thermoplastische Polyurethane,
B) Ester der phosphorigen Säure, welche pro Molekül mindestens eine Oxetangruppe sowie mindestens einen Rest eines zwei- oder mehrwertigen Phenols enthalten und

gegebenenfalls

C) Füll- und Verstärkungsstoffe,
D) Flammschutzadditive,
E) Elastomermodifikatoren.

EP 0 776 934 A1

## Beschreibung

Die Erfindung betrifft Formmassen aus Polyolefinen, Styrolpolymerisaten, Polyamiden, Polyalkylmethacrylaten, Polyphenylensulfiden, ABS-Pfropfpolymerisaten und/oder thermoplastischen Polyurethanen, die Phosphorigsäureester enthalten.

Zu Polycarbonat und Polyester, insbesondere Polyalkylenterephthalat-Formmassen, werden Phosphorigsäureester zur Stabilisierung bei thermischer Belastung, insbesondere zur Verhinderung von Verfärbungserscheinungen bei der Herstellung der Produkte, bei Compoundierungen und anschließender Granulierung der Produkte und Verarbeitung dieser Produkte zu thermoplastischen Formkörpern zugesetzt (z.B. DE-OS 2 140 207, DE-OS 2 255 639 und DE-OS 2 615 341).

Weiterhin ist bekannt, daß durch Zugabe von tertiären Phosphorigsäureestern zu Polycarbonat eine Verfärbung bei der Herstellung und Verarbeitung reduziert werden kann (DE-AS 1 128 653 und US-P 3 305 520).

Weiterhin ist bekannt, daß Phosphorigsäureester in Kombination mit Ba-, Sr- oder Ca-Carbonat zur Stabilisierung von bromiertem Polycarbonat enthaltenden Gemischen eingesetzt werden können (DE-OS 2 064 599).

Es wurde nun gefunden, daß bei Formmassen aus Polyolefinen, Styrolpolymerisaten, Polyamiden, Polyalkylmethacrylaten, Polyphenylensulfiden, ABS-Pfropfpolymerisaten und/oder thermoplastischen Polyurethanen, die Phosphorigsäureester enthalten, eine deutliche Reduzierung des Verfärbungsverhaltens, insbesondere bei Alterungsversuchen, zu beobachten ist. Die erfindungsgemäßen Formmassen besitzen eine gute Hydrolyse- und Thermostabilität.

Gegenstand der Erfindung sind thermoplastische Formmassen enthaltend

A) Polymere, ausgewählt aus der Gruppe der Polyolefine, Styrolpolymerisate, Polyamide, Polyalkylmethacrylate, Polyphenylensulfide, ABS-Pfropfpolymerisate, thermoplastische Polyurethane, und

B) Ester der phosphorigen Säure, welche pro Molekül mindestens eine Oxetangruppe sowie mindestens einen Rest eines zwei- oder mehrwertigen Phenols enthalten und

gegebenenfalls

C) Füll- und Verstärkungsstoffe,

D) Flammschutzadditive,

E) Elastomermodifikatoren.

Der Gehalt an Polymeren gemäß Komponente A beträgt im allgemeinen 20 bis 99,99, vorzugsweise 40 bis 99,97, insbesondere 60 bis 99,95 Gew.-Teile.

Der Gehalt an Phosphorigsäureester gemäß Komponente B in der Formmasse beträgt im allgemeinen 0,01 bis 2,5, vorzugsweise 0,03 bis 1,0, insbesondere 0,05 bis 0,4 Gew.-Teile (bezogen auf die Gesamtmischung).

Falls der Mischung Füll- und Verstärkungsstoffe zugesetzt werden, verwendet man vorzugsweise bis zu 45, insbesondere bevorzugt 10 bis 40 Gew.-Teile Füll-und Verstärkungsstoffe.

Mineralische Flammschutzadditive werden bevorzugt in Mengen von 30 bis 55 Gew.-Teilen zugesetzt.

Die erfindungsgemäßen Formmassen können bis zu 20, vorzugsweise 3 bis 18, insbesondere 6 bis 15 Gew.-Teile halogenierte Verbindungen und bis zu 8, vorzugsweise 2 bis 6 Gew.-Teile Antimonverbindungen, insbesondere Antimontrioxid oder Antimonpentoxid, enthalten.

Elastomermodifikatoren gemäß Komponente E) werden bevorzugt in Mengen bis zu 30 Gew.-Teilen, besonders bevorzugt 5 bis 25 Gew.-Teilen zugesetzt. Die Mengenangaben beziehen sich jeweils auf die Gesamtmischung.

### Komponente A

Erfindungsgemäße Polyolefine sind Polymere von aliphatischen ungesättigten Kohlenwasserstoffen, wie beispielsweise Ethylen, Propylen, Butylen oder Isobutylen, die nach üblichen Verfahren, z.B. Radikalpolymerisation, erhalten werden und mittlere Gewichtsmittel-Molekulargewichte $\overline{M}w$ (gemessen nach gelchromatographischen Methoden) zwischen 5000 und 3 000 000 haben. Es ist sowohl Hochdruckpolyolefin als auch Niederdruckpolyolefin brauchbar. Die ungesättigten Kohlenwasserstoffe können auch mit anderen Vinylmonomeren wie z.B. Vinylacetat, Acrylsäure oder Acrylsäureester in bekannter Weise copolymerisiert sein, wobei der Anteil an Vinylmonomeren maximal 30 Gew.-%, vorzugsweise bis 25 Gew.-% beträgt.

Bevorzugt sind Polyethylen und Polypropylen.

Styrolpolymerisate im Sinne der Erfindung sind Homopolymerisate des Styrols (Polystyrol) oder Mischpolymerisate mit vorzugsweise Acrylnitril und/oder Maleinsäureester, die z.B. durch Suspensionspolymerisation in Gegenwart von Katalysatoren aus den Monomeren bzw. der Mischung von Monomeren hergestellt werden. Die Styrolpolymerisate haben im allgemeinen Gewichtsmittel-Molekulargewichte von 10.000 bis 600.000 (gemessen in DMF bei einer Konzentration von 5 g/l und 20°C).

Erfindungsgemäß geeignete $C_1$-$C_4$-Alkyl-methacrylatpolymere sind bekannte Polymerisate der Methyl-, Ethyl-, Propyl- und -Butylmethacrylsäureester, vorzugsweise des Methyl- und Ethylmethacrylsäureesters. Es sind sowohl Homopolymerisate als auch Copolymerisate dieser Methacrylsäureester zu verstehen. Darüber hinaus können bis maximal 9,5 Gew.-% andere ethylenisch ungesättigte, copolymerisierbare Monomere, bezogen jeweils auf Gesamtgewicht an diesen ungesättigten Monomeren und den Methacrylsäureestern copolymerisiert sein, so daß die erfindungsgemäß geeigneten $C_1$-$C_4$-Alkyl-methacrylatpolymeren aus 90,5 Gew.-% bis 100 Gew.-% an Alkyl-methacrylat-Einheiten und aus 9,5 Gew.-% bis 0 Gew.-% an anderen ethylenisch ungesättigten Monomereinheiten aufgebaut sind.

Andere ethylenisch ungesättigte copolymerisierbare Monomere sind beispielsweise (Meth)Acrylnitril, ($\alpha$-Methyl)Styrol, Bromstyrol, Vinylacetat, Acrylsäure-$C_1$-$C_8$-alkylester, (Meth)Acrylsäurearylester, (Meth)Acrylsäure, Ethylen, Propylen, N-Vinylpyrrolidon, Vinylsulfonsäure(salze) oder Styrolsulfonsäure(salze).

Die $C_1$-$C_4$-Alkyl-methacrylatpolymere stellen in bestimmten organischen Lösungsmitteln lösliche Stoffe dar und besitzen somit einen linearen oder verzweigten Aufbau; gelhaltige Polymere, also solche mit vernetzten Strukturen, sind nicht Polymere (b) im Sinne der Erfindung.

Die Polyalkylmethacrylate können nach bekannten Polymerisationsverfahren hergestellt werden, vorzugsweise aber durch radikalische oder thermische Polymerisation. Als Polymerisationsverfahren eignen sich Verfahren in Emulsion, Masse, Suspension, Dispersion, insbesondere die Emulsions-, vorzugsweise aber die Masse- bzw. Lösungspolymerisation. Die Molekulargewichte können durch bekannte verfahrensbedingte Maßnahmen beispielsweise durch Verwendung von Mercaptanen aus Reglern in weiten Bereichen variiert werden. Üblicherweise besitzen die erfindungsgemäß einsetzbaren Polyalkylmethacrylate derartige Molekulargewichte (bzw. Staudinger-Indices, bzw. Schmelzviskositäten), die deren thermoplastische Spritzguß- oder Extrusionsverarbeitung sinnvoll machen.

Polyphenylensulfide im Sinne der Erfindung sind beispielsweise in EP-A 171 021 beschrieben.

Thermoplastische Polyurethane im Sinne der Erfindung sind Reaktionsprodukte aus Diisocyanaten, mit ganz oder überwiegend aliphatischen Oligo- und/oder Polyestern und/oder -ethern sowie einem oder mehreren Kettenverlängerern. Diese thermoplastischen Polyurethane sind im wesentlichen linear und besitzen thermoplastische Verarbeitungscharakteristiken.

Die thermoplastischen Polyurethane sind entweder bekannt oder können nach bekannten Verfahren (siehe beispielsweise US-PS 3 214 411, J.H. Saunders und K.C. Frisch, "Polyurethanes, Chemistry and Technology", Vol. II, Seiten 299 bis 451, Interscience Publishers, New York, 1964 und Mobay Chemical Coporation, "A Processing Handbook for Texin Urethane Elastoplastic Materials", Pittsburgh, PA) hergestellt werden.

Ausgangsmaterialien zur Herstellung der Oligoester und Polyester sind beispielsweise Adipinsäure, Bernsteinsäure, Subecinsäure, Sebacinsäure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Dimethylpropylenglykol in Betracht. Darüber hinaus können gemeinsam mit den Glykolen kleine Mengen bis zu 1 mol-%, tri- oder höher funktionelle Alkohole, z.B. Trimethylolpropan, Glycerin, Hexantriol usw. eingesetzt werden.

Die resultierenden Hydroxyl-oligo- oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt von ca. 0,01 bis 0,2 %.

Oligoester bzw. Polyester sind auch oligomere oder polymere Lactone, wie beispielsweise Oligo-caprolacton oder Poly-captolacton, und aliphatische Polycarbonate, wie beispielsweise Poly-butandiol-(1,4)-carbonat oder Polyhexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 % liegt.

Oligo- bzw. Polyether zur Herstellung der thermoplastischen Polyurethane sind beispielsweise solche auf Basis von Tetramethylenglykol, Propylenglykol und Ethylenglykol.

Polyacetale sind ebenfalls als Polyether zu verstehen und einsetzbar.

Die Oligoether bzw. Polyether sollen mittlere Molekulargewichte $\overline{M}n$ (Zahlenmittel, ermittelt über die OH-Zahl der Produkte) von 600 bis 2000, vorzugsweise von 1000 bis 2000 haben.

Als organisches Diisocyanat wird zur Herstellung der Polyurethane gemäß Komponente A vorzugsweise 4,4'-Diphenylmethan-diisocyanat verwendet. Es sollte weniger als 5 % 2,4'-Diphenylmethan-diisocyanat und weniger als 2

% des Dimeren von Diphenylmethan-diisocyanat enthalten. Es ist weiterhin wünschenswert, daß die Acidität, gerechnet als HCl im Bereich von c. 0,005 bis 0,2 % liegt. Die Acidität, gerechnet als % HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane verwendet werden, beispielsweise die Diisocyanate des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphtylens, des 1,5-Naphthylens, des 4,4'-Diphenylens, das 2,2-Diphenylpropan-4,4'-diisocyanat, das Azobenzol-4,4'-diisocyanat, des Diphenylsulfon-4,4'-diisocyanat, das Dichlorhexanmethylen-diisocyanat, das Pentamethylen-diisocyanat, das Hexamethylen-diisocyanat, das 1-Chlorbenzol-2,4-diisocyanat, das Furfuryl-diisocyanat, das Dicyclohexylmethan-diisocyanat, das Isophorondiisocyanat, das Diphenylethan-diisocyanat und Bis(-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-β-hydroxyethylether, 1,3-Phenylen-bis-β-hydroxylethylether, Bis-(hydroxymethyl-cyclohexan), Hexandiol, Adipinsäure, ω-Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3'-Dichlorbenzidin, 3,3'-Dinitrobenzidin, Ethanolamin, Aminopropylalkohol, 2,2-Dimethylpropanolamin, 3-Aminocyclohexylalkohol und p-Aminobenzylalkohol zu nennen. Das Molverhältnis Oligo- bzw. Polyester zu bifunktionellen Kettenverlängerern bewegt sich im Bereich 1:1 bis 1:50, vorzugsweise 1:2 bis 1:30.

Außer difunktionellen Kettenverlängerern können auch in untergeordneten Mengen bis zu etwa 5 mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane gemäß Komponente A eingesetzt werden.

Die als Bausteine für die thermoplastischen Polyurethane genannten Diisocyanate, Oligoester, Polyester, Polyether, Kettenverlängerer und monofunktionellen Komponenten sind entweder literaturbekannt oder nach literaturbekannten Verfahren erhältlich.

Die bekannte Herstellung der thermoplastischen Polyurethan-Komponente ist beispielsweise in DE-OS 4 309 981 beschrieben.

ABS-Polymerisate im Sinne der Erfindung sind beispielsweise in EP-A 345 522 beschrieben.

**Komponente B**

Phosphorigsäureester im Sinne der Erfindung sind Ester der phosphorigen Säure, welche pro Molekül mindestens eine Oxetangruppe sowie mindestens einen Rest eines zwei- oder mehrwertigen Phenols enthalten.

Bevorzugt sind Phosphorigsäureester der Formel (I)

$$[(RO)_2P\text{-}O]_{n1}\text{—}Ar\text{—}(O-\underset{}{\overset{\displaystyle OR}{\overset{|}{P}}}\text{-}O\text{-}Ar)_{n2}\text{-}[O\text{-}P(OR)]_2]_{n3} \qquad (I),$$

in welcher

$n_1$ 1 oder eine beliebige ganze Zahl >1, vorzugsweise 1 bis 9,

$n_2$ 0 oder eine beliebige ganze Zahl >0, vorzugsweise 0 bis 2,

$n_3$ 1 oder eine beliebige ganze Zahl >1, vorzugsweise 1 bis 9 bedeutet,

R Alkyl, Aralkyl, Cycloalkyl, Aryl oder Hetaryl bedeutet, wobei mindestens einer der Reste R den Rest eines mindestens eine Oxetangruppe enthaltenden Monoalkohols darstellt, und

Ar für Aryl steht, welches gegebenenfalls durch Alkyl und/oder Hydroxy substituiert sein kann, und wobei für $n_2 \neq$

0 Ar gleich oder verschieden sein kann,

und Verbindungen ausgewählt aus
Tris-[(3-ethyloxetanyl-3)-methyl]-phosphit,
Tris-[(3-pentyloxetanyl-3)-methyl]-phosphit,
Phenyl-bis-[(3-ethyloxetanyl-3)-methyl]-phosphit,
2-Phenoxy-spiro(1,3,2-dioxaphosphorinan-5,3'-oxetan),
3,3-Bis-[spiro(oxetan-3',5"-(1",3",2"-dioxaphosphorinan-2"))-oxy-methyl]-oxetan.

Als Reste R in Formel (I) sind beispielsweise geeignet: $C_1$-$C_{18}$-Alkyl, ein- bzw. mehrkerniges $C_3$-$C_{10}$-Cycloalkyl, Phenyl-$C_1$-$C_2$-alkyl, ein- bzw. mehrkerniges $C_6$-$C_{18}$-Aryl, wie Phenyl, Naphthyl, Anthracyl, Phenanthryl, Biphenyl, Phenoxyphenyl oder Fluorenyl sowie Hetaryle wie beispielsweise Tetrahydrofuryl, wobei die Arylreste beispielsweise durch Alkyl und/oder Halogen, wie $C_1$-$C_{18}$-Alkyl, Chlor und/oder Brom substituiert sein können.

Der Rest R kann auch ein Derivat eines oder mehrerer Oxetangruppen P enthaltender $C_1$-$C_6$-Monoalkohol sein.

Als Oxetangruppe P sei der heterocyclische Rest

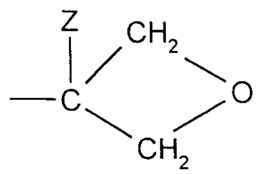

verstanden, worin Z beispielsweise H, $CH_3$, $C_2H_5$, n-$C_5H_{11}$, -$CH_2$-$C_5H_{11}$, -$CH_2$-O-$C_6H_{13}$ oder $CH_2$-O-$C_2H_5$ sein kann.

Der Rest R in Formel (I) kann oben auch selbst die Oxetangruppe P, beispielsweise mit Z = H bedeuten.

Der Rest Ar leitet sich von Phenolen mit 2 phenolischen Hydroxylgruppen ab. Vorzugsweise leitet sich der Rest Ar von den folgenden Verbindungen ab: Hydrochinon, Resorcin, Brenzcatechin, Di-t-butylbrenzcatechin, 4,4'-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylenbisphenole, $\alpha,\alpha'$-Bis-(hydroxyphenyl)-diisopropylbenzol sowie die entsprechenden kernalkylierten bzw. kernhalogenierten Verbindungen, beispielsweise Bis-(4-hydroxy-phenyl)-propan-2,2 (Bisphenol A), Bis-(4-hydroxy-3,5-dichlorphenyl)-propan-2,2 (Tetrachlorbisphenyl A), Bis-(4-hydroxy-3,5-dibromophenyl)-propan-2,2 (Tetrabrombisphenol A), Bis-(4-hydroxy-3,5-dimethyl-phenyl)-propan-2,2 (Tetramethylbisphenol A), Bis-(4-hydroxy-3-methyl-phenyl-propan-2,2-cyclohexan-1,1 (Bisphenol Z) sowie $\alpha,\alpha'$-Bis-(4-hydroxy-phenyl)-p-diisopropyl-benzol, Dihydroxynaphthaline und Dihydroxyanthracene.

Als Phenole mit mehr als zwei phenolischen Hydroxylgruppen eignen sich beispielsweise Phloroglucin, Pyrogallol.

Unter den beanspruchten Verbindungen werden die sich von 2,2-Bis-(hydroxyphenyl)-alkanen und oxetangruppenhaltigen Monoalkoholen ableitenden Verbindungen der Formel (I) bevorzugt, also Verbindungen der Formel (I), worin Ar einem Rest der Formel (II) entspricht

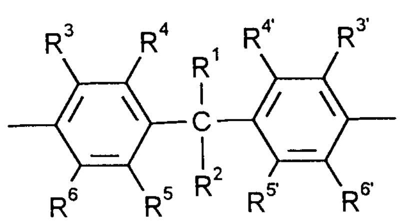

(II),

worin

$R^1$ und $R^2$ gleich oder verschieden sind und H, $C_1$-$C_{18}$-Alkyl, ein- oder mehrkerniges $C_3$-$C_6$-Cycloalkyl oder ein-oder mehrkerniges $C_6$-$C_{18}$-Aryl bedeuten,

$R^3$, $R^{3'}$, $R^4$, $R^{4'}$, $R^5$, $R^{5'}$, $R^6$ und $R^{6'}$ gleich oder verschieden sind und H, $C_1$-$C_{18}$-Alkyl, ein- oder mehrkerniges $C_3$-$C_6$-Cycloalkyl, ein- oder mehrkerniges $C_6$-$C_{18}$-Aryl, $C_1$-$C_{18}$-Alkoxy, $C_1$-$C_{18}$-Aryloxy oder Halogen bedeuten.

Die als Substituent für Verbindungen der Formel (II) geeigneten Alkylsubstituenten können unverzweigt oder verzweigt, gesättigt oder ungesättigt sein, geeignete Arylsubstituenten können beispielsweise Phenyl oder Biphenyl sein, als Halogensubstituenten kommen bevorzugt Cl oder Br vor.

Die Verbindungen der Formel (I), in denen Ar einem Rest der Formel (II) entspricht, werden durch Umsetzung der entsprechenden Bisphenole der Formel (III)

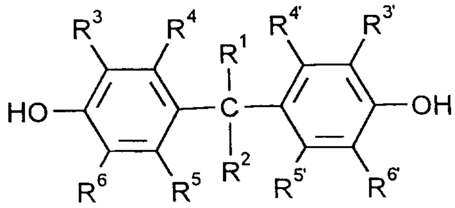 (III),

worin

$R^1$ bis $R^6$ sowie $R^{3'}$ bis $R^{6'}$, die die obengenannte Bedeutung haben, in der in DE-OS 2 255 639 beschriebenen Weise erhalten.

Die Verbindungen der beanspruchten Art stellen hochsiedende Flüssigkeiten, Harze oder Feststoffe dar. Sie sind in organischen Lösungsmitteln gut löslich, insbesondere in den bei der Herstellung von Polycarbonaten verwendeten Lösungsmitteln und eignen sich deshalb besonders zur Verwendung als Stabilisatoren in Polycarbonaten hoher Viskosität, welche bei hohen Temperaturen hergestellt bzw. verarbeitet werden.

Die Verbindungen, von denen nachstehend einige Beispiele aufgeführt sind, können einzeln als auch in Mischung hergestellt und angewendet werden. Die Phosphite können einen linearen oder verzweigten Aufbau besitzen.

Eine beispielhafte Auswahl gibt die folgende Übersicht:

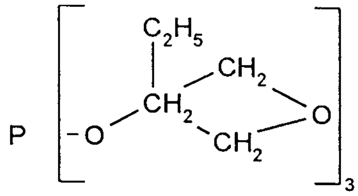

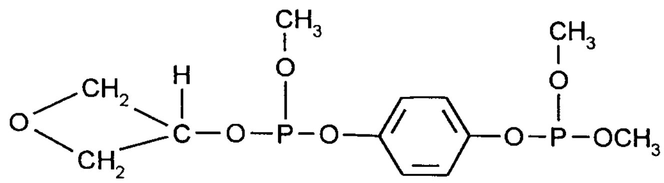

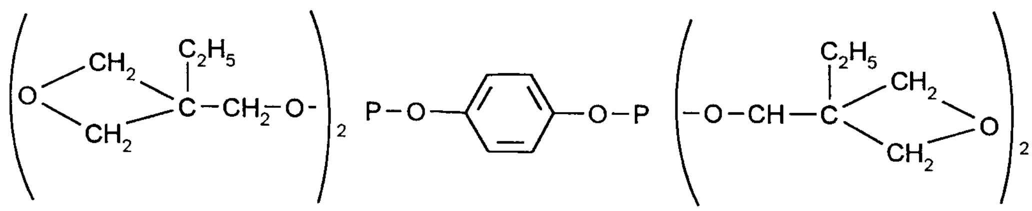

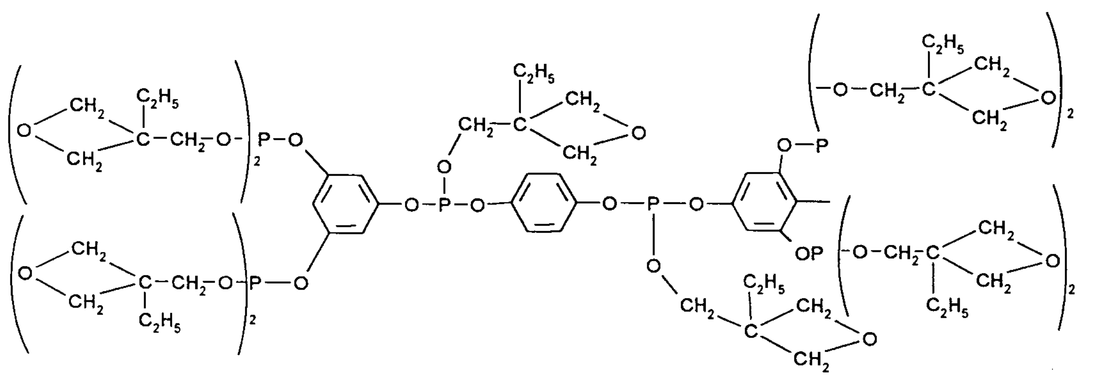

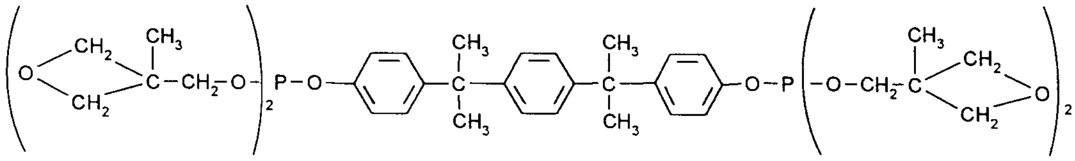

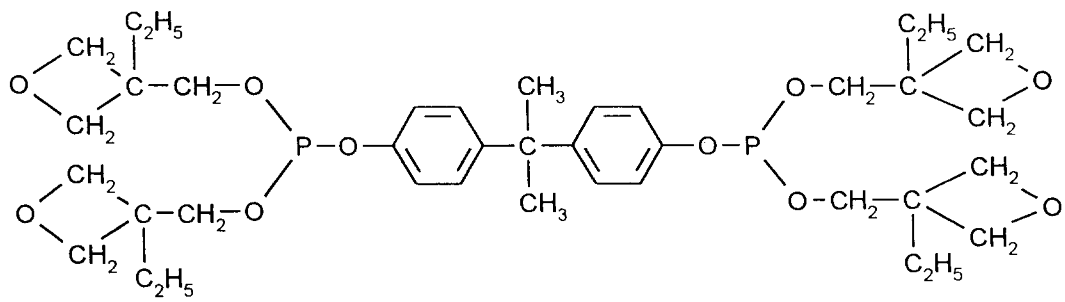

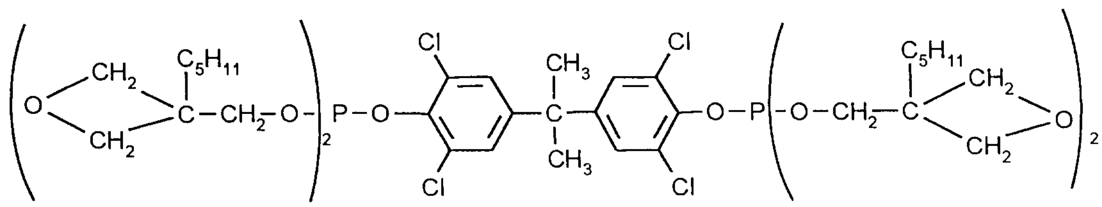

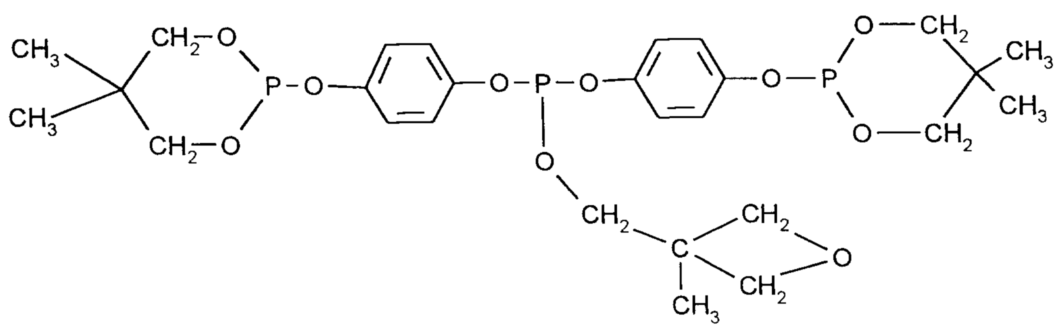

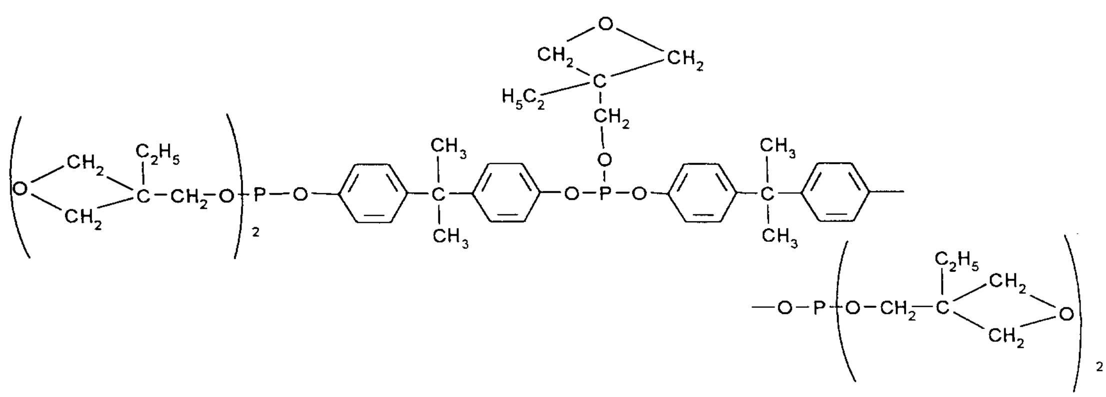

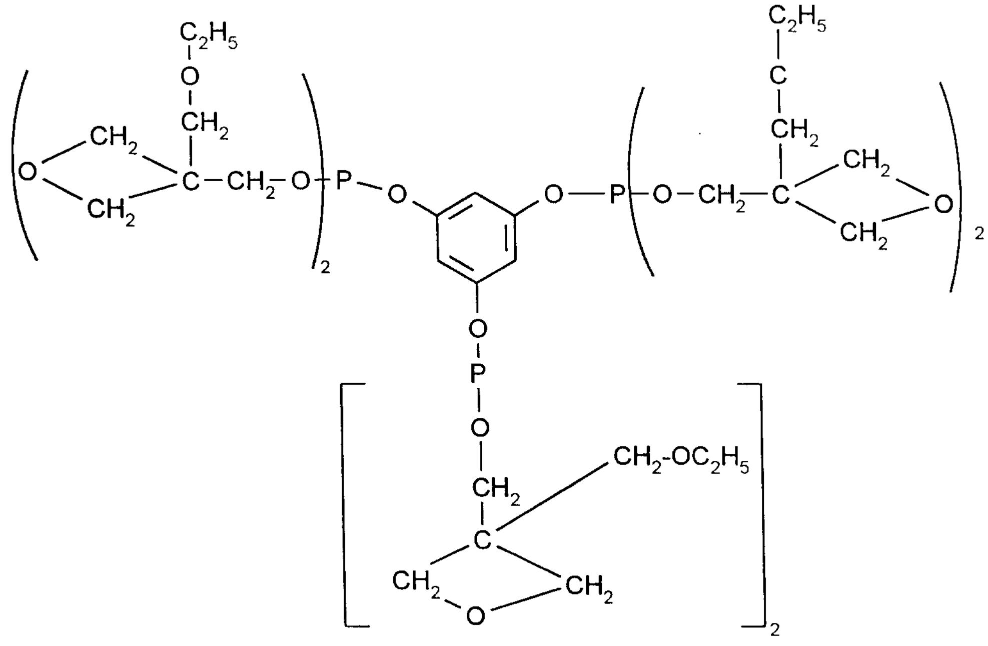

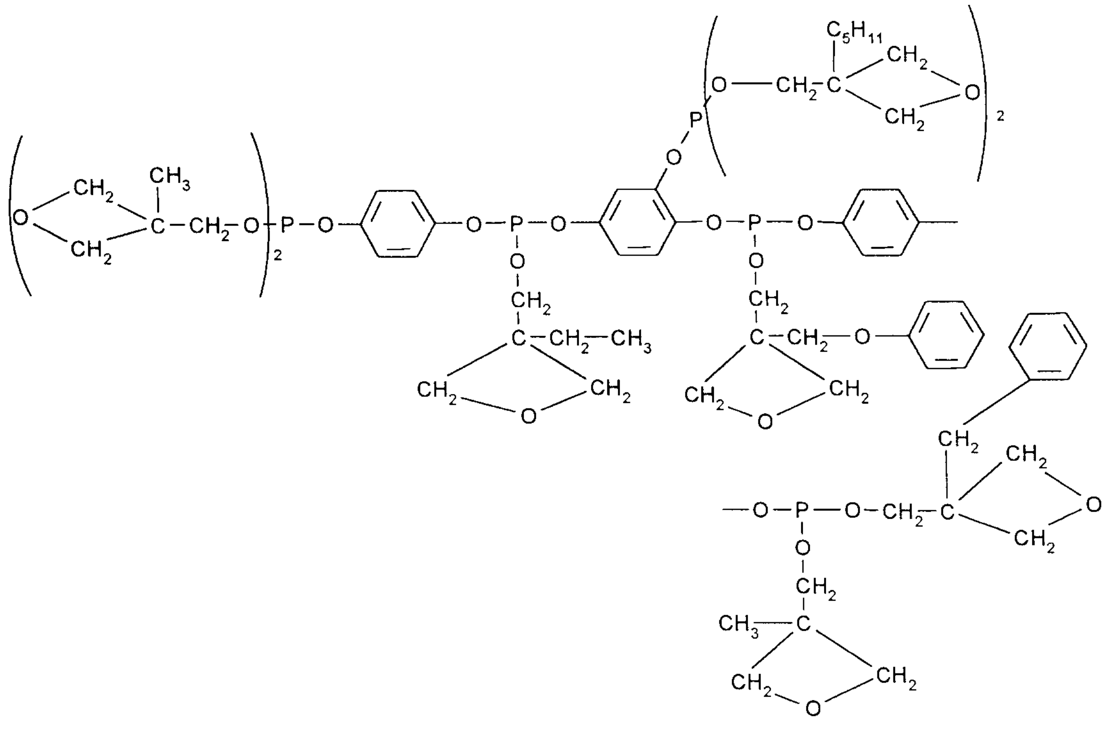

Die Phosphorigsäureester der Formel (I) sind bekannt und lassen sich nach den in der DE-OS 22 55 639 (= US-P 4 073 769 und 4 323 501) beschriebenen Verfahren herstellen. Die weiterhin genannten neutralen Ester der phosphorigen Säure sind ebenfalls bekannt (DE-OS 2 140 207, entspricht US-P 3 794 629).

Die Herstellung der erfindungsgemäßen Phosphite der Formel (I), in denen R der Rest eines oxetangruppenhaltigen Monoalkohols ist, kann beispielsweise erfolgen, indem ein Gemisch, bestehend aus einem oxetangruppenhaltigen Monoalkohol R-OH und einer zwei oder mehrere phenolischen Hydroxylgruppen enthaltenden Arylverbindung, beispielsweise einem Bisphenol der Formel (III), in Gegenwart eines alkalischen Katalysators mit Triphenylphosphit umgesetzt wird, wobei sich das gewünschte Produkt unter Abspaltung von Phenol bildet. Als Reaktionstemperatur seien

100°-180°C, als Katalysatoren seien NaOH, $NaOCH_3$, Na-phenolat, $Na_2CO_3$, KOH und Tributylamin genannt.

Die Reaktion kann in Substanz oder unter Zusatz von Lösungsmitteln erfolgen. Das Molverhältnis der Reaktanten oxetangruppenhaltiger Monoalkohol R-OH, Arylverbindung unf Triphenylphosphit, ergibt sich aus dem herzustellenden Endprodukt der Formel (I).

Den Polymeren können die oxetangruppenhaltigen Phosphite gemäß Komponente B) sowohl einzeln als auch in Kombination miteinander in den genannten Konzentrationen zugesetzt werden.

Die Herstellung der stabilisierten Polymere kann erfolgen, indem das Phosphit entweder in reiner Form dem geschmolzenen Polymer oder gegebenenfalls in Lösung in einem niedrigsiedenden Lösungsmittel dem Polymer zudosiert wird. Auch durch Tränkung von gepulverten oder granulierten Polymeren, jeweils gegebenenfalls Mineralien, Aerosilen oder anderer geeigneter Trägermaterialien mit dem Phosphit (gegebenenfalls mit dessen Lösung in einem Lösungsmittel wie zum Beispiel Isopropanol) in einer geeigneten Mischapparatur, gegebenenfalls mit anschließender Kompaktierung lassen sich die stabilisierten Polymere herstellen. Auch durch Zugabe als Batch während des Herstellungs-/ Compoundierprozesses (Herstellung des Batches durch Einarbeitung des Phosphits in das Polymer beispielsweise durch Extrusion), gegebenenfalls als Batch auf Basis Polyalkylenterephthalat oder gegebenenfalls als Batch auf Basis Polycarbonat lassen sich die erfindungsgemäßen Polymere herstellen. Das Batch kann granulatfömig oder pulverförmig sein. Die Aufarbeitung/ Verarbeitung der erfindungsgemäßen Polymere erfolgt nach bekannten Techniken.

Entsprechendes gilt für die Zudosierung des Phosphits während der Herstellung des Polymers nach bekannten Verfahren in die Schmelze bzw. in einem Lösungsmittel.

## Komponente C

Als Füll- und Verstärkungsstoffe können Glasfasern, Glaskugeln, Glimmer, Silikate, Quarz, Talkum, Titandioxid, Wollastonit, u. a. eingesetzt werden, die auch oberflächenbehandelt sein können. Bevorzugte Verstärkungsstoffe sind handelsübliche Glasfasern. Die Glasfasern, die im allgemeinen einen Faserdurchmesser zwischen 8 und 18 µm haben, können als Endlosfasern oder als geschnittene oder gemahlene Glasfasern eingesetzt werden, wobei die Fasern ohne als auch mit einem geeignetem Haftvermittler bzw. Haftvermittlersystem für das jeweilige erfindungsgemäß eingesetzte Polymer ausgerüstet sein können.

## Komponente D

Als Flammschutzadditive sind handelsübliche organische Verbindungen oder Halogenverbindungen mit Synergisten oder handelsübliche organische Stickstoffverbindungen oder organisch/anorganische Phosphorverbindungen geeignet. Auch mineralische Flammschutzadditive wie Mg-Hydroxid oder Ca-Mg-Carbonat-Hydrat (z.B. DE-OS 4 236 122) können eingesetzt werden.

Als halogenhaltige, insbesondere bromierte und chlorierte, organische Verbindungen seien beispielhaft genannt:

Ethylen-1,2-bistetrabromphthalimid,
Epoxidiertes Tetrabrombisphenol A-Harz,
Tetrabrombisphenol-A-oligocarbonat,
Tetrachlorbisphenol-A-oligocarbonat,
Pentabrompolyacrylat,
bromiertes Polystyrol.

Pentabrompolyacrylat hat im allgemeinen mittlere Molekulargewichte $\overline{M}_w$ (Gewichtsmittel) von 10 000 bis 200 000, bromiertes Polystyrol im allgemeinen 10 000 bis 500 000.

Bevorzugt werden epoxidiertes Tetrabrombisphenol-A und Tetrabrombisphenol-A-Oligocarbonat verwendet.

Epoxidiertes Tetrabrombisphenol-A ist ein bekanntes Diepoxidharz mit einem Molekulargewicht von etwa 350 bis etwa 2 100, vorzugsweise 360 bis 1 000, besonders bevorzugt 370 bis 400, und besteht im wesentlichen aus mindestens einem Kondensationsprodukt von Bisphenol A und Epihalogenhydrin und wird beschrieben durch die Formel (IV)

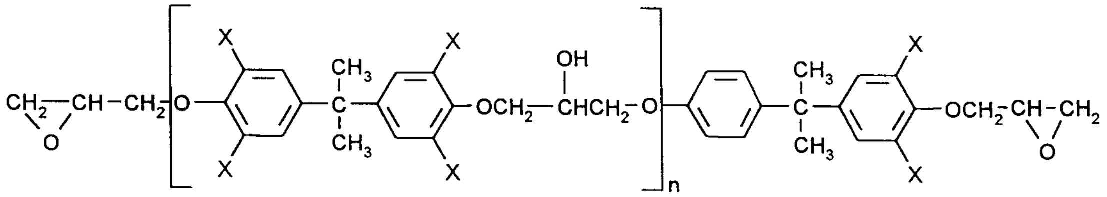

(IV),

worin

X Wasserstoff oder Brom darstellt und

n eine Durchschnittszahl zwischen Null und weniger als 2,3 ist (vgl. z.B. EP-A 180 471).

Tetrabrombisphenol-A-oligocarbonat bzw. Tetrachlorbisphenol-A-oligocarbonat ist beschrieben durch die Formel (V), wobei die Oligomere entweder mit Phenol oder mit Tribromphenol bzw. Trichlorphenol terminiert werden:

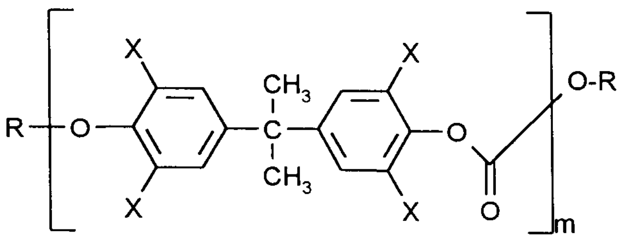

(V),

R = 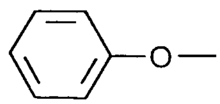 oder

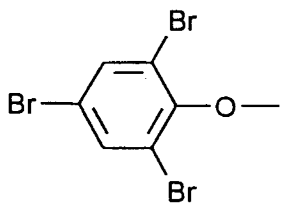

worin

X Wasserstoff, Brom oder Chlor darstellt,

m ist eine Durchschnittszahl zwischen 4 und 7.

Tetrabrom(chlor)bisphenol-A-oligocarbonat ist bekannt und nach bekannten Verfahren herstellbar.

Als organische Phosphorverbindungen sind die Phosphorverbindungen gemäß EP-A 345 522 (US-PS 061 745) oder DE-OS 43 28 656.9 in den dort beschriebenen Mengen geeignet, z.B. Triphenylphosphat, oligomere Phosphate, Resorcindiphosphat oder eine Mischung daraus.

**Komponente E**

Als Elastomermodifikatoren kommen handelsübliche EP(D)M-Kautschuke, Pfropfkautschuke auf Basis Butadien, Styrol, Acrylnitril, Acrylatkautschuke, thermoplastische Polyurethane (wie oben beschrieben) oder EVA-Copolymere mit oder ohne funktionelle Kopplungsgruppen infrage (z.B. EP-A 345 522). Diese Elastomermodifikatoren sind als Blendpartner für Polyalkylenterephthalat-, Styrolpolymerisat- und Polyphenylensulfide geeignet.

Die erfindungsgemäßen Phosphorigsäureester können zur Stabilisierung gegen Verfärbungen bei der Herstellung, Compoundierung und Verarbeitung der genannten Thermoplaste eingesetzt werden.

Gegenstand der Erfindung ist daher auch die Verwendung von obengenannten Phosphorigsäureester zur Stabilisierung von Polyolefin- und Styrolpolymerisat-Formmassen.

Die erfindungsgemäßen Formmassen können übliche Additive, wie Gleit- und Entformungsmittel, Verarbeitungshilfsmittel, Nukleierungsmittel, Antistatika, Stabilisatoren enthalten.

Die erfindungsgemäßen Formmassen aus den jeweiligen Komponenten und gegebenenfalls weiteren bekannten Zusätzen wie Stabilisatoren, Farbstoffen, Pigmenten, Gleit- und Entformungsmitteln, Verstärkungsstoffen, Nukleierungsmittel sowie Antistatika, können hergestellt werden, indem man die jeweiligen Bestandteile in bekannter Weise vermischt und bei polymerrelevanten Temperaturen in üblichen Aggregaten wie Innenkneter, Extruder, Doppelwellenschnecken schmelzcompoundiert oder schmelzextrudiert.

Die erfindungsgemäßen Formmassen können zum Herstellen von Formkörpern und Folien verwendet werden, die gegen Verfärbung und Abbauverhalten bei Temperaturalterung und Heißwasserlagerung durch die erfindungsgemäßen Phosphorigsäureester stabilisiert worden sind.

Gegenstand der Erfindung ist daher auch die Verwendung von obengenannten thermoplastischen Formmassen zur Herstellung von Formkörpern und Folien sowie die daraus hergestellten Formkörper und Folien.

**Beispiele**

Eingesetzte Phosphorigsäureester:

Phosphit A:

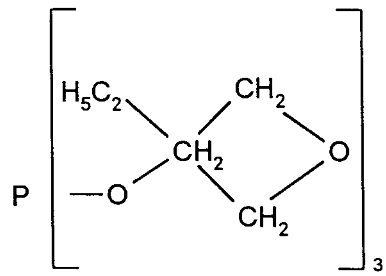

Phosphit B:

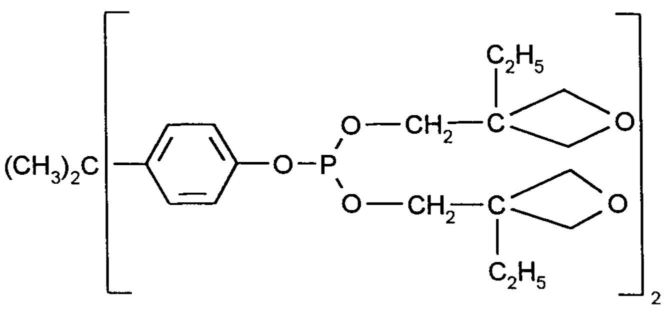

**Beispiel 1** (Vergleich)

100 Gew.-% Polystyrol 476 L (BASF AG)

**Beispiel 2** (erfindungsgemäß)

99,90 Gew.-% Polystyrol 476 L (BASF AG)
0,10 Gew.-% Phosphit A

**Beispiel 3** (erfindungsgemäß)

99,4335 Gew.-% Polystyrol 476 L (BASF AG)
0,5665 Gew.-% Phosphit B als Lösung in Isopropanol entsprechend
0,1 Gew.-% reines Phosphit B,
0,4665 Gew.-% Isopropanol

**Beispiel 4** (Vergleich)

100 Gew.-% Lucalen A 2910 M (BASF AG) = Polyethylen

**Beispiel 5** (erfindungsgemäß)

99,90 Gew.-% Lucalen A 2910 M (BASF AG)
0,10 Gew.-% Phosphit A

**Beispiel 6** (erfindungsgemäß)

99,4335 Gew.-% Lucalen A 2910 M (BASF AG)
0,5665 Gew.-% Phosphit B als Lösung in Isopropanol entsprechend
0,1 Gew.-% reines Phosphit B
0,4665 Gew.-% Isopropanol

**Beispiel 7** (Vergleich)

100 Gew.-% Polypropylen (Novolen 1100 L, BASF AG)

**Beispiel 8** (erfindungsgemäß)

99,90 Gew.-% Novolen 1100 L (BASF AG) = Polypropylen
0,10 Gew.-% Phosphit A

**Beispiel 9** (erfindungsgemäß)

99,4335 Gew.-% Novolen 1100 L (BASF AG)
0,5665 Gew.-% Phosphit B als Lösung in Isopropanol entsprechend
0,10 Gew.-% reines Phosphit B,
0,4665 Gew.-% Isopropanol.

**Beispiel 10** (Vergleich)

100 Gew.-% by Lucryl G66 Q14 (BASF AG) = Polymethylacrylat

**Beispiel 11** (erfindungsgemäß)

99,90 Gew.-% Lucryl G66 Q14 (BASF AG)
0,10 Gew.-% Phosphit A

**Beispiel 12** (erfindungsgemäß)

99,4335 Gew.-% Lucryl G66 Q14 (BASF AG)
0,5665 Gew.-% Phosphit B als Lösung in Isopropanol entsprechend
0,10 Gew.-% reines Phosphit B
0,4665 Gew.-% Isopropanol

**Beispiel 13** (Vergleich)

100 Gew.-% Novodur P3T (BAYER AG) = Acrylbutadienstyrol

**Beispiel 14** (erfindungsgemäß)

99,90 Gew.-% Novodur P3T (BAYER AG)
0,10 Gew.-% Phosphit A

**Beispiel 15** (erfindungsgemäß)

99,4335 Gew.-% Novodur P3T (BAYER AG)
0,5665 Gew.-% Phosphite B als Lösung in Isopropanol entsprechend
0,10 Gew.-% reines Phosphit B
0,4665 Gew.-% Isopropanol

**Beispiel 16** (Vergleich)

100 Gew.-% Desmopan 385 S (BAYER AG) = thermoplastisches Polyurethan

**Beispiel 17** (erfindungsgemäß)

99,90 Gew.-% Desmopan 385 S (BAYER AG)
0,10 Gew.-% Phosphit A

**Beispiel 18** (erfindungsgemäß)

99,4335 Gew.-% Desmopan 385 S (BAYER AG)
0,5665 Gew.-% Phosphit B als Lösung in Isopropanol entsprechend
0,10 Gew.-% reines Phosphit B
0,4665 Gew.-% Isopropanol

**Beispiel 19** (Vergleich)

100 Gew.-% Durethan B30S (BAYER AG) = Polyamid

**Beispiel 20** (erfindungsgemäß)

99,90 Gew.-% Durethan B30S (BAYER AG)
0,10 Gew.-% Phosphit A

**Beispiel 21** (erfindungsgemäß)

99,4335 Gew.-% Durethan B30S (BAYER AG)
0,5665 Gew.-% Phosphit B als Lösung in Isopropanol entsprechend
0,10 Gew.-% reines Phosphit B
0,4665 Gew.-% Isopropanol

**Beispiel 22** (Vergleich)

100 Gew.-% Tedur KU 1-9510 (BAYER AG) = Polyphenylensulfid

**Beispiel 23** (erfindungsgemäß)

99,90 Gew.-% Tedur KU 1-9510 (BAYER AG)
0,10 Gew.-% Phosphit A

**Beispiel 24** (erfindungsgemäß)

99,4335 Gew.-% Tedur KU 1-9510 (BAYER AG)
0,5665 Gew.-% Phosphit B als Lösung in Isopropanol:
0,10 Gew.-% reines Phosphit B
0,4665 Gew.-% Isopropanol

Die Komponenten werden gemischt und anschließend mittels eines Extruders compoundiert. Das erhaltene Granulat wird auf einer handelsüblichen Spritzgußmaschine zu Formkörpern verspritzt.

Tabelle 1

| Prüfung | Dimension | Vorschrift | Bedingungen | Beispiel 1 (Vergleich) | Beispiel 2 (erf.-gemäß) | Beispiel 3 (erf.-gemäß) |
|---|---|---|---|---|---|---|
| Kerb-schlagzähig-keit $a_k$ | $kJ/m^2$ | ISO 180/1A (Izod) | ohne Alterung bei 23°C, Luft | 5,2 | 5,4 | 5,7 |
| Schlagzähig-keit $a_n$ | $kJ/m^2$ | ISO 180/1U | ohne Alterung bei 23°C, Luft | 8x95 | 9x100 | 8x106 |
| $a_n$ | $kJ/m^2$ | ISO 180/1U (Izod) | 7d/90°C Luft | 10x80 | 9x83 | 10x92 |
| $a_n$ | $kJ/m^2$ | ISO 180/1U | 14d/90°C Luft | 10x78 | 10x81 | 10x86 |
| $a_n$ | $kJ/m^2$ | ISO 180/1U | 7d/90°C $H_2O$ | 9x85 | 8x87 | 5x105 |
| $a_n$ | $kJ/m^2$ | ISO 180/1U | 14d/90°C $H_2O$ | 10x96 | 6x109 | 9x93 |
| MVR | $cm^3/10$ min | DIN 53 735 | 230°C/2,16 kg | 6,3 | 7,0 | 6,7 |
| Farbe | | visuelle Beurteilung | ohne Alterung bei 23°C, Luft | hell | heller als Bsp.1 | wie Bsp. 2 |
| Farbe | | visuelle Beurteilung | 7d/90°C Luft | leicht gelblich verfärbt | keine Verfärbung | wie Bsp. 2 |
| Farbe | | visuelle Beurteilung | 14d/90°C Luft | deutlich stärker vergilbt als nach 7d | leicht gelb, aber viel heller als Bsp.1 | wie Bsp. 2 |

Bei der Schlagzähigkeit wurden immer 10 Prüfkörper getestet Alle nicht aufgeführten Werte wurden deshalb nicht genannt, weil diese bei der Prüfung nicht gebrochen waren.

Tabelle 2

| Prüfung | Dimension | Vorschrift | Bedingungen | Beispiel 4 (Vergleich) | Beispiel 5 (erf.-gemäß) | Beispiel 6 (erf.-gemäß) |
|---|---|---|---|---|---|---|
| 3,5 % Biegespannung | $N/mm^2$ | ISO 178/DIN 53452 | 5mm/min | 3,1 | 3,3 | 3,3 |
| Biegefestigkeit | $N/mm^2$ | dto. | 5mm/min | 5,4 | 6,1 | 6,2 |
| Randfaserdehnung | % | dto. | 5mm/min | 7,0 | 7,6 | 7,9 |
| Kerbschlagzähigkeit $a_k$ | $kJ/m^2$ | ISO 180/1A (Izod) | ohne Alterung bei 23°C, Luft | nicht gebrochen | nicht gebrochen | nicht gebrochen |
| $a_k$ | $kJ/m^2$ | ISO 180/1A | 5d/80°C Luft | nicht gebrochen | nicht gebrochen | nicht gebrochen |
| $a_k$ | $kJ/m^2$ | ISO 180/1A | 10d/80°C Luft | nicht gebrochen | nicht gebrochen | nicht gebrochen |
| MVR | $cm^3$/10 min | DIN 53 735 | 230°C/2,16 kg | 29,2 | 28,4 | 25,8 |
| Farbe | | visuelle Beurteilung | ohne Alterung bei 23°C, Luft | grau-gelb, transparent | heller als Bsp. 4, transparent | heller als Bsp. 4, transparent |
| Farbe | | visuelle Beurteilung | 5d/80°C Luft | gelber, nicht ganz transparent | heller als Bsp. 4, transparent | wie Bsp. 5 |
| Farbe | | visuelle Beurteilung | 10d/80°C Luft | deutlich gelber, fast transluzent | heller als 4, transparent | wie Bsp. 5 |

Tabelle 3

| Prüfung | Dimension | Vorschrift | Bedingungen | Beispiel 7 (Vergleich) | Beispiel 8 (erf.-gemäß) | Beispiel 9 (erf.-gemäß) |
|---|---|---|---|---|---|---|
| Kerbschlagzähigkeit $a_k$ | $kJ/m^2$ | ISO 180/1A (Izod) | bei 23°C in Luft | 7,1 | 7,7 | 7,9 |
| Schlagzähigkeit $a_n$ | $kJ/m^2$ | ISO 180/1U | ohne Alterung bei 23°C, Luft | 74 | 75 | 65 |
| $a_n$ | $kJ/m^2$ | ISO 180/1U | 5d/60°C Luft | 67 | 75 | 66 |
| $a_n$ | $kJ/m^2$ | ISO 180/1U | 10d/60°C Luft | 71 | 72 | 63 |
| MVR | $cm^3$/10 min | DIN 53 735 | 250°C/2,16 kg | 12,7 | 12,3 | 12,2 |
| Farbe | | visuelle Beurteilung | ohne Alterung bei 23°C | milchig hell, transluzent | heller als Bsp. 7, transparent | heller als Bsp. 7, transparent |
| Farbe | | visuelle Beurteilung | 5d/60°C Luft | etwas gelber, transluzent | keine Änderung | keine Änderung |
| Farbe | | visuelle Beurteilung | 10d/60°C Luft | gelber, transluzenter | keine Änderung | keine Änderung |

Tabelle 4

| Prüfung | Dimension | Vorschrift | Bedingungen | Beispiel 10 (Vergleich) | Beispiel 11 (erf.-gemäß) | Beispiel 12 (erf.-gemäß) |
|---|---|---|---|---|---|---|
| Schlagzähigkeit $a_n$ | $kJ/m^2$ | ISO 180 /1U (IZOD) | bei 23°C in Luft | 13 | 13 | 13 |
| $a_n$ | $kJ/m^2$ | ISO 180 /1U | 7d/ 60°C Luft | 13 | 13 | 12 |
| $a_n$ | $kJ/m^2$ | ISO 180 /1U | 14d/ 60°C Luft | 12 | 13 | 13 |
| $a_n$ | $kJ/m^2$ | ISO 180 /1U | 5d/ 60°C $H_2O$ | 12 | 13 | 14 |
| $a_n$ | $kJ/m^2$ | ISO 180 /1U | 10d/ 60°C $H_2O$ | 12 | 13 | 12 |
| MVR | $cm^3/10min$ | ISO 1133 | 200°C/ 2,16kg | 0,55 | 0,58 | 0,59 |
| Farbe | | visuell | ohne Alterung bei 23°C | transparent | transparent heller als Beispiel 10 | transparent heller als Beispiel 11 |
| Farbe | | visuell | 5d/ 60°C Luft | transparent | transparent heller als Beispiel 10 | transparent heller als Beispiel 11 |
| Farbe | | visuell | 10d/ 60°C Luft | transparent | transparent heller als Beispiel 10 | transparent heller als Beispiel 11 |
| Farbe | | visuell | 5d/ 60°C $H_2O$ | transluzent | transluzent heller als Beispiel 10 | transluzent heller als Beispiel 11 |
| Farbe | | visuell | 10d/ 60°C $H_2O$ | transluzent | transluzent heller als Beispiel 10 | transluzent heller als Beispiel 11 |

Tabelle 5

| Prüfung | Dimension | Vorschrift | Bedingungen | Beispiel 13 (Vergleich) | Beispiel 14 (erf.-gemäß) | Beispiel 15 (erf.-gemäß) |
|---|---|---|---|---|---|---|
| Schlagzähigkeit $a_n$ | $kJ/m^2$ | ISO 180/ 1U (IZOD) | bei 23°C in Luft | 104 10 X spröde | 100 10 X spröde | 117 10 X spröde |
| $a_n$ | $kJ/m^2$ | ISO 180/ 1U | 7d/ 100°C Luft | 83 | 70 | 95 |
| $a_n$ | $kJ/m^2$ | ISO 180/ 1U | 7d/ 100°C $H_2O$ | 107 | 112 | 129 |
| MVR | $cm^3/10min$ | ISO 1133 | 220°C/ 10kg | 1,9 | 1,9 | 1,9 |
| Farbe | | visuell | ohne Alterung bei 23°C | hellbraun | hellbraun, etwas dunkler als Beispiel 13 | hellbraun, Farbe wie Beispiel 13 |
| Farbe | | visuell | 7d/ 100°C Luft | braun | braun, dunkler als Beispiel 13 | braun, Farbe wie Beispiel 13 |
| Farbe | | visuell | 7d/ 100°C $H_2O$ | weiß | weiß | hellweiß |

Tabelle 6

| Prüfung | Dimension | Vorschrift | Bedingungen | Beispiel 16 (Vergleich) | Beispiel 17 (erf.-gemäß) | Beispiel 18 (erf.-gemäß) |
|---|---|---|---|---|---|---|
| Streckspannung | MPa | ISO 527 | 50 mm/min | 34 | 36 | 34 |
| Bruchspannung | MPa | ISO 527 | 50 mm/min | 34 | 36 | 34 |
| Bruchdehnung | % | ISO 527 | 5 mm/min | 380 | 394 | 388 |
| Kerbschlagzähigkeit $a_k$ | $kJ/m^2$ | ISO 180/ 1A (IZOD) | bei 23°C in Luft | nicht gebrochen | nicht gebrochen | nicht gebrochen |
| $a_k$ | $kJ/m^2$ | ISO 180/ 1U | 7d/ 130°C Luft | nicht gebrochen | nicht gebrochen | nicht gebrochen |
| MVR | $cm^3$/10min | ISO 1133 | 200°C/ 10kg | 50 | 38 | 60 |
| Farbe | | visuell | ohne Alterung bei 23°C | hell, transluzent | hell, fast transparent | hell, hellste Farbe, transparent |
| Farbe | | visuell | 7d/ 130°C Luft | gelb, fast transparent | gelb, transparent | gelb, hellste Farbe, transparent |

Tabelle 7

| Prüfung | Dimension | Vorschrift | Bedingungen | Beispiel 19 (Vergleich) | Beispiel 20 (erf.-gemäß) | Beispiel 21 (erf.-gemäß) |
|---|---|---|---|---|---|---|
| Bruchdehnung | % | ISO 527 | 5 mm/min | 31 | 39 | 43 |
| Kerbschlag-zähigkeit $a_k$ | $kJ/m^2$ | ISO 180/1A (IZOD) | bei 23°C in Luft | 5,2 | 5,5 | 5,5 |
| $a_k$ | $kJ/m^2$ | ISO 180/1A | 7d/ 180°C Luft | 8 | 10 | 8 |
| $a_k$ | $kJ/m^2$ | ISO 180/1A | 14d/180°C Luft | 11 | 9 | 12 |
| Schlag-zähigkeit $a_n$ | $kJ/m^2$ | ISO 180/1U (IZOD) | bei 23°C in Luft | nicht gebrochen | nicht gebrochen | nicht gebrochen |
| $a_n$ | $kJ/m^2$ | ISO 180/1U | 7d/100°C $H_2O$ | nicht gebrochen | nicht gebrochen | nicht gebrochen |
| $a_n$ | $kJ/m^2$ | ISO 180/1U | 14d/100°C $H_2O$ | nicht gebrochen | nicht gebrochen | nicht gebrochen |
| Farbe | | visuell | ohne Alterung bei 23°C | hell-gelblich | heller als Beispiel 19 | heller als Beispiel 20 |
| Farbe | | visuell | 7d/180°C Luft | gelb | etwas heller als Beispiel 19 | etwas heller als Beispiel 20 |
| Farbe | | visuell | 14d/180°C Luft | leicht dunkelgelb | heller als Beispiel 19 | heller als Beispiel 20 |
| Farbe | | visuell | 7d/100°C $H_2O$ | hell-gelblich | etwas heller als Beispiel 19 | etwas heller als Beispiel 20 |
| Farbe | | visuell | 14d/100°C $H_2O$ | hell-gelblich | etwas heller als Beispiel 19 | etwas heller als Beispiel 20 |

Tabelle 8

| Prüfung | Dimension | Vorschrift | Bedingungen | Beispiel 22 (Vergleich) | Beispiel 23 (erf.-gemäß) | Beispiel 24 (erf.-gemäß) |
|---|---|---|---|---|---|---|
| MVR | $cm^3/(10min)$ | ISO 1133 | 320°C/5 kg | 57 | 61 | 59 |
| Farbe | | visuell | ohne Alterung | dunkelgrau | heller als Beispiel 22 | heller als Beispiel 23 |

## Patentansprüche

1. Thermoplastische Formmassen enthaltend

A) Polymere, ausgewählt aus der Gruppe der Polyolefine, Styrolpolymerisate, Polyamide, Polyalkylmethacrylate, Polyphenylensulfide, ABS-Pfropfpolymerisate, thermoplastische Polyurethane,

B) Ester der phosphorigen Säure, welche pro Molekül mindestens eine Oxetangruppe sowie mindestens einen Rest eines zwei- oder mehrwertigen Phenols enthalten und

gegebenenfalls

C) Füll- und Verstärkungsstoffe,
D) Flammschutzadditive,
E) Elastomermodifikatoren.

2. Thermoplastische Formmassen gemäß Anspruch 1, wobei der Gehalt an Komponente A) 20 bis 99,99 Gew.-Teile an Komponente B) 0,01 bis 2,5 Gew.-Teile und gegebenenfalls der Gehalt an Komponente C) bis zu 45 Gew.-Teile, an Komponente D) bis zu 55 Gew.-Teilen und an Komponente E) bis zu 30 Gew.-Teilen beträgt.

3. Thermoplastische Formmassen gemäß Anspruch 1, wobei Komponente B) ausgewählt ist aus Phosphorigsäureester der Formel (I)

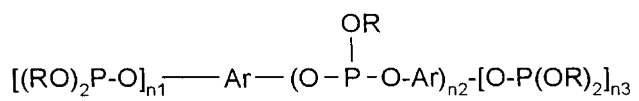

(I),

in welcher

$n_1$ 1 oder eine beliebige ganze Zahl >1,
$n_2$ 0 oder eine beliebige ganze Zahl >0,
$n_3$ 1 oder eine beliebige ganze Zahl >1, bedeutet,
R Alkyl, Aralkyl, Cycloalkyl, Aryl oder Hetaryl bedeutet, wobei mindestens einer der Reste R den Rest eines mindestens eine Oxetangruppe enthaltenden Monoalkohols darstellt, und
Ar für Aryl steht, welches gegebenenfalls durch Alkyl und/oder Hydroxy substituiert sein kann, und wobei für $n_2 \neq 0$ Ar gleich oder verschieden sein kann,

und Verbindungen ausgewählt aus
Tris-[(3-ethyloxetanyl-3)-methyl]-phosphit,
Tris-[(3-pentyloxetanyl-3)-methyl]-phosphit,
Phenyl-bis-[(3-ethyloxetanyl-3)-methyl]-phosphit,
2-Phenoxy-spiro(1,3,2-dioxaphosphorinan-5,3'-oxetan),
3,3-Bis-[spiro(oxetan-3',5"-(1",3",2"-dioxaphosphorinan-2"))-oxy-methyl]-oxetan.

4. Thermoplastische Formmassen gemäß Anspruch 3, wobei in Formel (I) R für $C_1$-$C_{18}$-Alkyl, ein- oder mehrkerniger $C_3$-$C_{10}$-Cycloalkyl, Phenyl-$C_1$-$C_2$-alkyl, ein- oder mehrkerniges $C_6$-$C_{18}$-Aryl sowie Hetaryl, wobei die Arylreste durch Alkyl und/oder Halogen substituiert sein können, und R ferner für die Oxetangruppe P

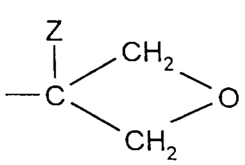

steht, worin

Z für Wasserstoff, $CH_3$, $C_2H_5$, n-$C_5H_{11}$, -$CH_2$-$C_5H_{11}$, -$CH_2$-O-$C_6H_{13}$ oder -$CH_2$-$OC_2H_5$ steht.

5. Thermoplastische Formmassen gemäß Anspruch 3, wobei sich der Rest Ar von den folgenden Verbindungen ableitet:
Hydrochinon, Resorcin, Brenzcatechin, Di-t-butylbrenzcatechin, 4,4'-Dihydroxydiphenyl, Bis-(hydroxyphenyl)-alkane, Bis-(hydroxyphenyl)-cycloalkane, $\alpha,\alpha'$-Bis-(hydroxyphenyl)-diisopropylbenzol sowie deren kernalkylierte

und/oder kernhalogenierten Derivate, Phloroglucin, Pyrogallol.

6. Thermoplastische Formmassen gemäß Anspruch 1, worin Komponente B) für die folgenden Verbindungen steht:

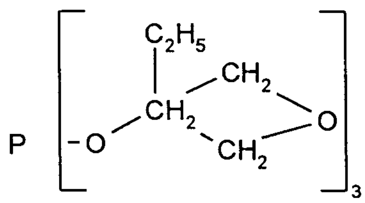

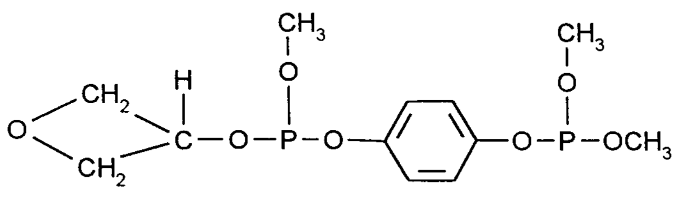

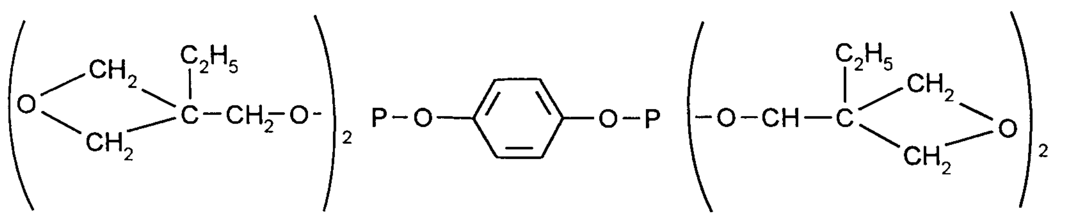

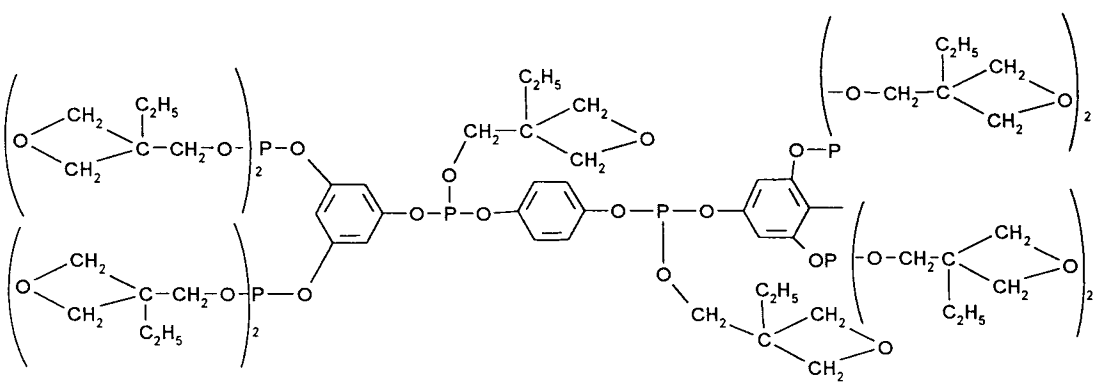

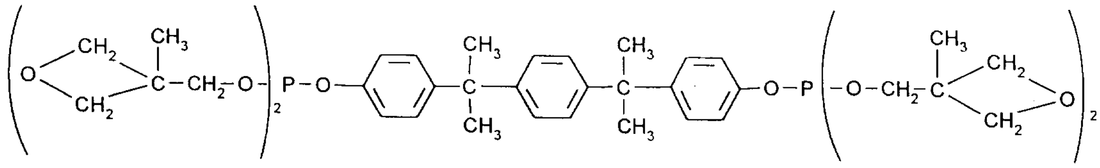

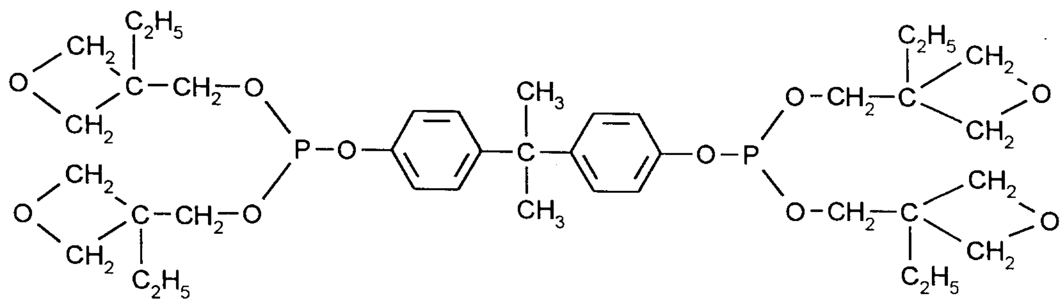

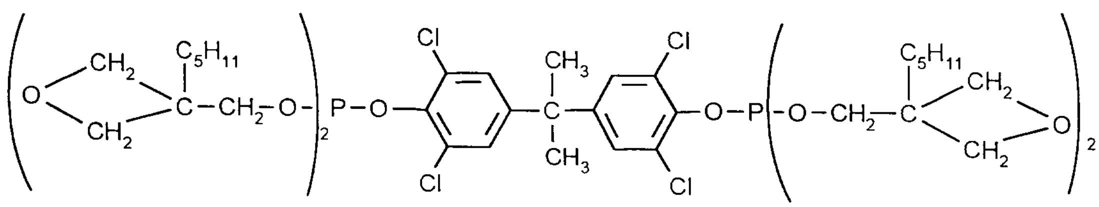

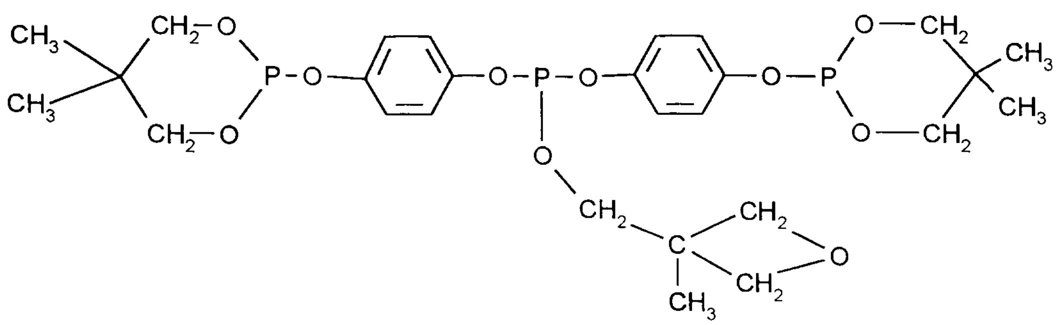

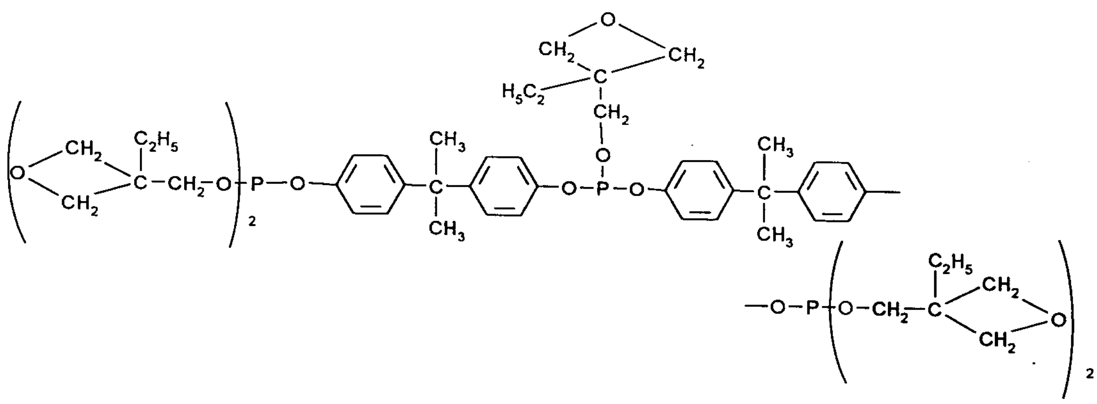

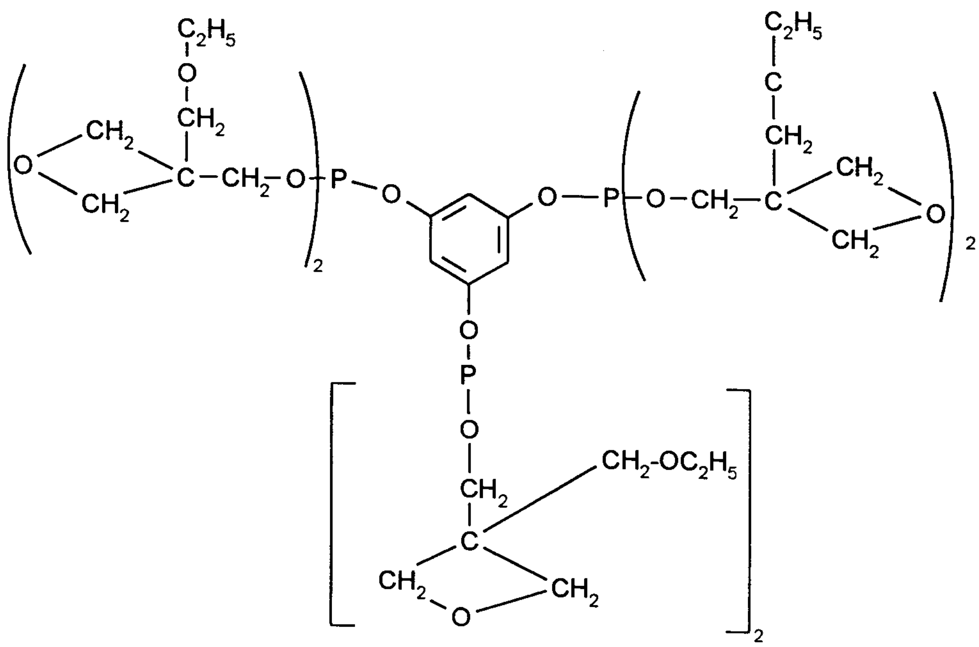

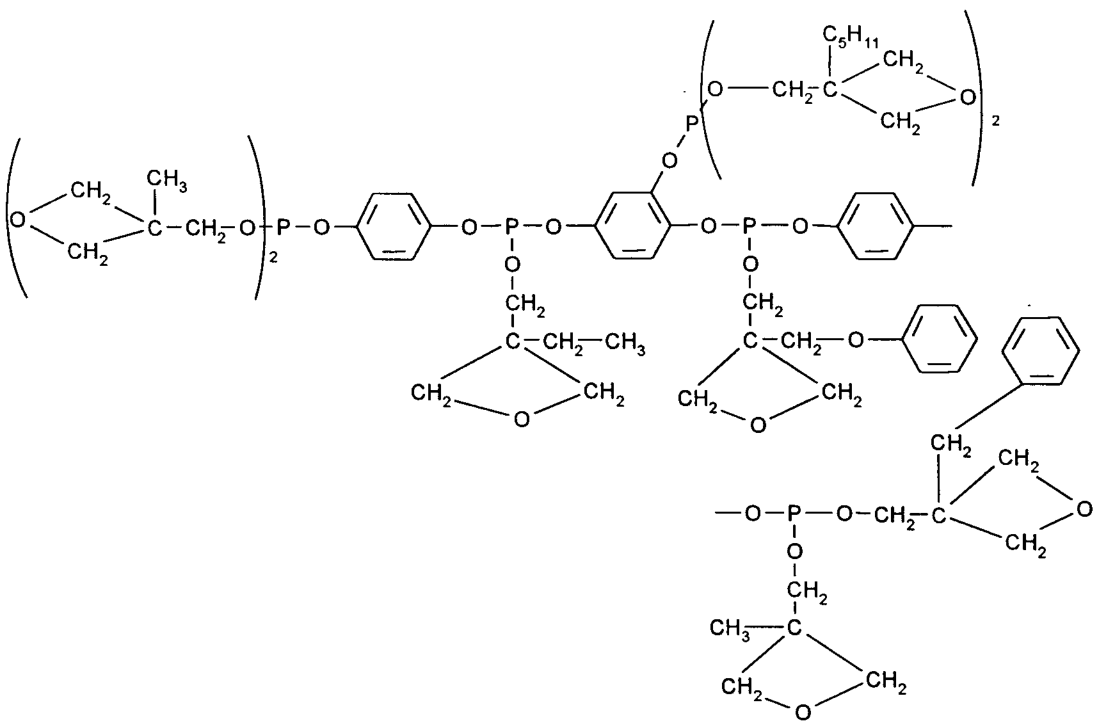

7. Thermoplastische Formmassen gemäß Anspruch 3, worin Komponente B) für

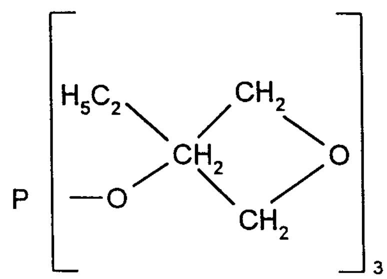

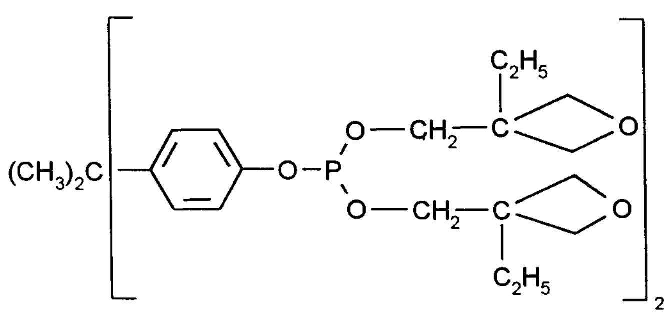

steht.

8. Verwendung der Formmassen gemäß Anspruch 1 zur Herstellung von Formkörpern und Folien.

9. Formkörper und Folien, hergestellt aus Formmassen gemäß Anspruch 1.

Europäisches Patentamt

# EUROPÄISCHER RECHERCHENBERICHT

Nummer der Anmeldung
EP 96 11 8448

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | DE 22 55 639 A (BAYER AG) 16.Mai 1974<br>* Seite 18 *<br>* Ansprüche 1,5-7 * | 1-9 | C08K5/529 |
| D,X | DE 21 40 207 A (BAYER AG) 15.Februar 1973<br>* Seite 10 *<br>* Ansprüche 1,2 * | 1-9 | |
| D,X | DE 26 15 341 A (BAYER AG) 27.Oktober 1977<br>* Seite 4, Absatz 2 *<br>* Seite 8 *<br>* Ansprüche 1,2 * | 1-9 | |

RECHERCHIERTE SACHGEBIETE (Int.Cl.6)
C08K

Der vorliegende Recherchenbericht wurde für alle Patentansprüche erstellt

| Recherchenort | Abschlußdatum der Recherche | Prüfer |
|---|---|---|
| DEN HAAG | 5.März 1997 | Siemens, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)